# EUROPÄISCHE PATENTSCHRIFT

(11) **EP 3 469 429 B1**
(45) Veröffentlichungstag und Bekanntmachung des Hinweises auf die Patenterteilung: **31.03.2021**
(21) Anmeldenummer: 17726578.2
(22) Anmeldetag: 19.05.2017
(51) Int. Cl.: G05B 19/042, G06F 21/00, H04L 29/06

(54) **VERFAHREN ZUM VERHINDERN EINES UNERLAUBTEN ZUGRIFFS AUF SOFTWAREANWENDUNGEN IN FELDGERÄTEN, SOWIE KOMMUNIKATIONSNETZWERK**
METHOD FOR PREVENTING AN UNAUTHORISED ACCESS TO SOFTWARE APPLICATIONS IN FIELD DEVICES, AND COMMUNICATION NETWORK
PROCÉDÉ POUR EMPÊCHER UN ACCÈS NON AUTORISÉ À DES APPLICATIONS LOGICIELLES DANS DES APPAREILS DE TERRAIN, ET RÉSEAU DE COMMUNICATION

(30) Priorität: 10.06.2016 DE 102016110723
(43) Veröffentlichungstag der Anmeldung: 17.04.2019
(73) Patentinhaber: Endress+Hauser Process Solutions AG, 4153 Reinach (CH)
(72) Erfinder: MANEVAL, Michael, 79650 Schopfheim (DE); WITTIG, Mario, 79618 Rheinfelden (DE)
(74) Vertreter: Andres, Angelika Maria
(86) Internationale Anmeldenummer: PCT/EP2017/062069
(87) Internationale Veröffentlichungsnummer: WO 2017/211569

(56) Entgegenhaltungen:
- WO-A1-98/54644
- CN-A- 104 683 981
- US-A1- 2015 150 073
- FU Z ET AL: "ISCP: Design and Implementation of An later-Domain Security Management Agent (SMA) Coordination Protocol", 20000410; 20000410 - 20000414, 10. April 2000 (2000-04-10), Seiten 565-578, XP010376709,

## Beschreibung

Die Erfindung betrifft ein Verfahren und ein Kommunikationsnetzwerk der Automatisierungstechnik zum Verhindern eines unerlaubten Zugriffs auf Softwareanwendungen, welche in Feldgeräten implementiert sind, wobei die Feldgeräte in dem Kommunikationsnetzwerk integriert sind und wobei jede Softwareanwendung über jeweils zumindest eine Kommunikationsschnittstelle Informationen innerhalb des Kommunikationsnetzwerks austauscht.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfigurierung und Parametrierung von Feldgeräten sowie zur Ansteuerung von Aktoren.

In vielen Feldgeräten sind Softwareanwendungen implementiert. Diese haben beispielsweise den Zweck, Messwerte aufzubereiten, die Kommunikation des Feldgeräts über den Feldbus zu steuern und/oder als Bedienelement für einen Benutzer zu dienen. Die Ein- und Ausgabe von Informationen, welche von einem Kommunikationsnetzwerk empfangen werden oder an ein solches gesendet werden, erfolgt über Kommunikationsschnittstellen der jeweiligen Softwareanwendung. Befinden sich zwei oder mehrere Softwareanwendungen auf einem Feldgerät, so können die Softwareanwendungen auch Informationen innerhalb des Feldgeräts über ihre jeweiligen zugeordneten Kommunikationsschnittstellen austauschen.

Die informationstechnische Sicherung solcher Kommunikationsschnittstellen ist von großer Bedeutung, um einen Missbrauch der Informationen zu verhindern und/oder einen unerlaubten Zugriff von außerhalb auf eine Softwareanwendung zu verhindern. Unter dem Begriff Informationssicherheit findet sich eine Vielzahl verschiedener Sicherheitskonzepte, welche in verschiedene Schutzziele, insbesondere in die Schutzziele Vertraulichkeit, Integrität, Verfügbarkeit und Authentizität unterteilt sind. Im Folgenden werden diese einzelnen Schutzziele näher erläutert:
Das Schutzziel Vertraulichkeit (englisch: confidentiality) legt fest, dass Informationen nur für einen bestimmten Empfängerkreis vorgesehen sind. Weitergabe und Veröffentlichung, sowie unbefugte Preisgabe der Informationen sind nicht erwünscht. Dieses Schutzziel wird unter anderem durch Sicherheitsfunktionen in Form von Verschlüsselungsverfahren erreicht.

Das Schutzziel Integrität (englisch: integrity) beschreibt die Verhinderung einer unautorisierten Modifikation von Informationen. Die Informationen dürfen nicht verändert werden und alle Änderungen müssen nachvollziehbar sein. Technisch kann dies beispielsweise durch Prüfsummen realisiert werden, welche mit einer Information mitübertragen werden und erkennen lassen, ob die Informationen verändert wurden.

Ein weiteres Beispiel für eine Schutzfunktion des Schutzzieles Integrität stellt Output Escaping dar. Hierbei werden bei zu übertragenden String-Werten kritische Zeichen, beispielsweise "<" oder "&", ersetzt durch die HTML-Einheit dieser Zeichen, in diesem Beispiel "&lt" für "<", bzw. "&amp" für "&". Die durch diese Methode manipulierte Information muss vom Empfänger jedoch richtig interpretiert werden, um Fehler zu verhindern.

Die Eingabe solcher kritischen Zeichen kann dazu führen, dass in einer Softwareanwendung ein Code ausgeführt wird, der möglicherweise Zugriff auf sensible Daten zulässt. Das Zeichen "<" beispielsweise leitet in HTML einen Befehl ein. Eine solche Eingabe kritischer Zeichen zum unerlaubten Zugriff auf eine Softwareanwendung wird Cross-Site-Scripting (auch: XSS) genannt.

Das Schutzziel Verfügbarkeit (englisch: availability) dient der Verhinderung von Systemausfällen. Der Zugriff auf Informationen muss innerhalb eines vereinbarten Zeitrahmens gewährleistet sein.

Das Schutzziel Authentizität (englisch: authenticity) bezeichnet die Eigenschaften der Echtheit, Überprüfbarkeit und Vertrauenswürdigkeit einer Information.

Die Veröffentlichung Z. Fu et.al., "ISCP: Design and Implementation of an Inter-Domain Security Management Agent (SMA) Coodination Protocol", 10. April 2000, Seiten 565-578, XP010376709, offenbart ein ISCP-Protokoll, welches es erlaubt, Sicherheitsfähigkeiten und Policy-Informationen zwischen verschiedenen Domänen zu kommunizieren und welches eine gute Skalierbarkeit, gutes Zusammenwirken verschiedener Domänen, Erweiterbarkeit und Sicherheit ermöglicht.

Mitunter können die auf den Feldgeräten implementierten Softwareanwendungen eine Vielzahl von einstellbaren Sicherheitsfunktionen, basierend auf Sicherheits- und/oder Funktionseigenschaften nach einem oder mehrerer Schutzziele, für die jeweiligen Kommunikationsschnittstellen aufweisen. Die jeweiligen eingestellten Sicherheitsfunktionen funktionieren jedoch nur dann sinnvoll, wenn in der sendenden Kommunikationsschnittstelle und in der empfangenden Kommunikationsschnittstelle dieselbe Sicherheitsfunktion aktiviert ist. Erlaubt die sendende Kommunikationsschnittstelle beispielsweise das Aktivieren einer Sicherheitsfunktion nach dem Schutzziel Integrität, wie beispielsweise das Mitübertragen einer Prüfsumme, so muss die empfangende Kommunikationsschnittstelle dieselbe Sicherheitsfunktion aktiviert haben, um die Prüfsumme der übertragenen Information validieren zu können. Im Falle einer anderen aktivierten Sicherheitsfunktion, wie beispielsweise dem Output Escaping oder dem Verschlüsseln einer Information, wird möglicherweise der Inhalt der Information von der empfangenden Kommunikationsschnittstelle fehlinterpretiert, falls in dieser nicht die identische Sicherheitsfunktion aktiviert ist.

Ausgehend von dieser Problematik liegt der Erfindung liegt die Aufgabe zugrunde, ein Verfahren und ein Kommunikationsnetzwerk vorzustellen, welches auf einfache Art und Weise in Feldgeräten implementierte Softwareanwendungen systematisch vor einem unerlaubten Zugriff schützt.

Die Aufgabe wird durch ein Verfahren zum Verhindern eines unerlaubten Zugriffs auf Softwareanwendungen, welche in Feldgeräten implementiert sind, gelöst, wobei die Feldgeräte in einem Kommunikationsnetzwerk der Automatisierungstechnik integriert sind und wobei jede Softwareanwendung über jeweils zumindest eine Kommunikationsschnittstelle Informationen innerhalb des Kommunikationsnetzwerks austauscht, umfassend:
- Erfassen aktuell aktivierter Sicherheitsfunktionen, die auf Sicherheits- und/oder Funktionseigenschaften basieren, von jeder der Kommunikationsschnittstellen der Softwareanwend ungen;
- Erfassen aller aktivierbaren Sicherheitsfunktionen einer jeden Kommunikationsschnittstelle;
- Ermitteln zumindest einer gemeinsamen Sicherheitsfunktion, die auf jeder der Kommunikationsschnittstellen aktivierbar ist;
- Anzeigen der zumindest einen gemeinsamen Sicherheitsfunktion und Auswählen zumindest einer angezeigten gemeinsamen Sicherheitsfunktion; und
- Re-Konfigurieren von jeder der Kommunikationsschnittstellen, wobei die jeweils aktuell eingestellten Sicherheitsfunktionen durch die zumindest eine ausgewählte gemeinsame Sicherheitsfunktion ersetzt werden, und
   wobei für den Fall, dass keine gemeinsame Sicherheitsfunktion ermittelt wurde, jede der Kommunikationsschnittstellen so re-konfiguriert wird, dass keine Sicherheitsfunktion aktiviert ist.

Das erfindungsgemäße Verfahren bietet den großen Vorteil, dass Sicherheitsfunktionen nur dann und gemeinsam aktiviert werden können, wenn diese auf allen Kommunikationsschnittstellen aktivierbar sind. Eine Sicherheitsfunktion wird somit systematisch für alle Kommunikationsschnittstellen aktiviert. Dadurch kann das gesamte Kommunikationsnetzwerk gegen unerlaubte Zugriffe von außen gesichert werden. Dabei arbeitet das Verfahren auf dem Grundsatz, dass nach Verfahrensablauf entweder auf allen Kommunikationsschnittstellen dieselben Sicherheitsfunktionen aktiviert sind oder auf keiner Kommunikationsschnittstelle eine Sicherheitsfunktion aktiviert ist. Dies ist insbesondere dann vorteilhaft, wenn Sicherheitsfunktionen, basierend auf Sicherheits- und/oder Funktionseigenschaften nach dem Schutzziel Integrity, aktiviert werden, die die übertragenen Informationen bewusst manipulieren, beispielsweise durch Hinzufügen einer Prüfsumme oder durch Output Escaping von kritischen Zeichen, beispielsweise von dem TAG eines Feldgeräts, der zwischen den Softwareanwendungen ausgetauscht wird.

Feldgeräte welche im Zusammenhang mit dem erfindungsgemäßen Verfahren verwendet werden sind im einleitenden Teil der Beschreibung beispielhaft genannt.

Eine bevorzugte Ausgestaltung des erfindungsgemäßen Verfahrens umfasst zusätzlich folgenden Verfahrensschritt:
- Evaluieren des Kommunikationsnetzwerks, wobei im Falle einer negativen Evaluation das Verfahren ab dem Schritt des Auswählens einer oder mehrerer gemeinsamer Sicherheitsfunktionen wiederholt wird.

Durch diesen Verfahrensschritt kann ein Verlust von Informationen verhindert werden, welcher im Falle einer fehlerhaften Re-Konfiguration der einzelnen Kommunikationsschnittstellen auftreten kann. Beispielsweise kann der Fehler auftreten, dass nicht bei allen Kommunikationsschnittstellen eine bestimmte gemeinsame Sicherheitsfunktion aktiviert werden konnte. In diesem Falle bergen diese Kommunikationsschnittstellen nach der Re-Konfiguration Sicherheitsrisikos. Ebenso kann eine Fehlinterpretation der empfangenen Informationen auftreten.

In einer bevorzugten Weiterbildung des erfindungsgemäßen Verfahrens ist vorgesehen, dass eine Modellierung und Visualisierung eines Informationsflusses der miteinander kommunizierenden Softwareanwendungen erfolgt, wobei die jeweiligen Kommunikationsschnittstellen und deren jeweils aktivierbare Sicherheitsfunktionen visualisiert werden.

Die Visualisierung erfolgt bevorzugt in einer stationären übergeordneten Einheit, beispielsweise in einem Plant Asset Management (PAM) System, welche von zentraler Stelle aus auf das Kommunikationsnetzwerk zugreift. Es kann vorgesehen sein, die einzelnen Kommunikationsschnittstellen und deren aktivierbare Sicherheitsfunktionen in tabellarischer Form zu visualisieren, oder die einzelnen Kommunikationsschnittstellen und deren aktivierbare Sicherheitsfunktionen in einem virtuellen Anlagenplan darzustellen. Es kann ebenso vorgesehen sein, dass die Visualisierung auf einer mobilen Einheit erfolgt, welche an das Kommunikationsnetzwerk angeschlossen ist. Bei der mobilen Einheit kann es sich um ein Handbediengerät oder um einen Laptop, oder aber auch um ein mobiles Endgerät wie ein Tablet oder ein Smartphone handeln.

In einer bevorzugten Weiterbildung des erfindungsgemäßen Verfahrens werden in der Visualisierung diejenigen einstellbaren Sicherheitsfunktionen ausgegraut, welche nicht zu den gemeinsamen, auf jeder der Schnittstellen aktivierbaren Sicherheitsfunktionen gehören. Für den Benutzer ist dadurch zum einen ersichtlich, welche Sicherheitsfunktionen auf allen Kommunikationsschnittstellen aktivierbar sind, zum anderen, welche weiteren Sicherheitsfunktionen theoretisch auf den jeweiligen Kommunikationsschnittstellen der einzelnen Softwareanwendungen aktivierbar sind.

Weiterhin sieht eine vorteilhafte Ausgestaltung des erfindungsgemäßen Verfahrens vor, dass die Auswahl zumindest einer gemeinsamen Sicherheitsfunktion über die Visualisierung des Informationsflusses erfolgt, was eine Bedienung durch den Benutzer erleichtert.

In einer vorteilhaften Weiterbildung des erfindungsgemäßen Verfahrens ist vorgesehen, dass das Verfahren nach Hinzufügen oder Entfernen einer Softwareanwendung ausgeführt wird.

In einer besonders bevorzugten Variante des erfindungsgemäßen Verfahrens wird das Verfahren nach jedem Update von einer der Softwareanwendungen ausgeführt.

In beiden Fällen ist somit jederzeit gewährleistet, dass die Schutzfunktionen auch nach Ändern oder Updaten einer Softwareanwendung konsistent sind. Die korrekte Interpretation der zwischen den Kommunikationsschnittstellen der jeweiligen Softwareanwendungen ausgetauschten Informationen ist dadurch jederzeit gewährleistet.

Des Weiteren wird die Aufgabe durch ein Kommunikationsnetzwerk zur Durchführung des erfindungsgemäßen Verfahrens gelöst.

In einer Ausgestaltung des erfindungsgemäßen Kommunikationsnetzwerks ist vorgesehen, dass das Kommunikationsnetzwerk ein Drahtlosnetzwerk ist. Im Prinzip kann jedes gebräuchliche Protokoll eines drahtlosen Netzwerks, beispielsweise WLAN, Bluetooth®, ZigBee®, RFID, NFC, etc. oder ein drahtloses Feldbusprotokoll wie beispielsweise WirelessHART® verwendet werden.

Eine weitere Ausgestaltung des erfindungsgemäßen Kommunikationsnetzwerks sieht vor, dass das Kommunikationsnetzwerk ein drahtgebundenes Netzwerk ist. Im Prinzip kann jedes gebräuchliche Protokoll eines drahtgebundenen Netzwerks, insbesondere eines Feldbusnetzwerks der Automatisierungstechnik, wie beispielsweise Foundation Fieldbus®, Profibus®, Profinet®, HART®, Modbus®, Industrial Ethernet, etc. eingesetzt werden.

Die Erfindung wird anhand der nachfolgenden Figur näher erläutert. Es zeigt
Fig. 1: eine Ausgestaltung des erfindungsgemäßen Kommunikationsnetzwerks; und
Fig. 2: eine Ausgestaltung des erfindungsgemäßen Verfahrens auf Grundlage des Sicherheitszieles Integrität.

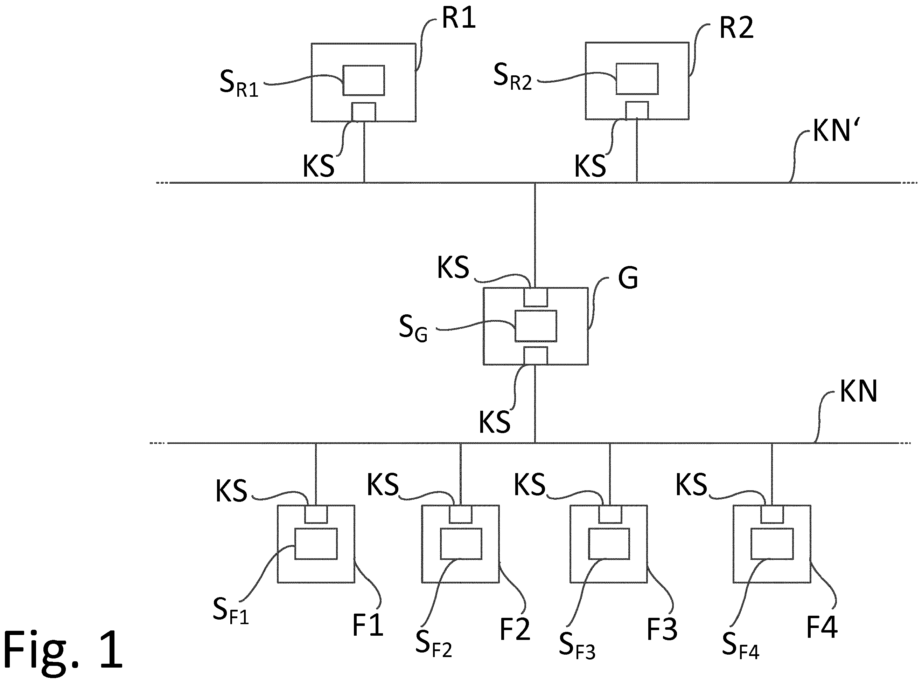

In Fig. 1 ist eine Ausgestaltung des erfindungsgemäßen Kommunikationsnetzwerks KN, KN' näher dargestellt. An einem Kommunikationsnetzwerk KN' sind mehrere Rechnereinheiten, (Arbeitsplatzrechner, Workstations) R1, R2, angeschlossen. Die Rechnereinheit R1 dient hier als übergeordnete Einheit (Leitsystem bzw. Steuereinheit), unter anderem zur Prozessvisualisierung, Prozessüberwachung und zum Engineering, sowie zum Bedienen und Überwachen von Feldgeräten. Die Rechnereinheit R2 dient hier als Plant Asset Management System (PAM). Das Kommunikationsnetzwerk KN' arbeitet z. B. nach dem Profibus DP-Standard oder nach dem HSE (High Speed Ethernet)-Standard der Foundation Fieldbus. Über ein Gateway G, das auch als Linking Device, Field Controller oder auch als Segment-Koppler bezeichnet wird, ist das Kommunikationsnetzwerk KN' mit einem weiteren Abschnitt eines Kommunikationsnetzwerks KN verbunden. An dieses Kommunikationsnetzwerk KN sind mehrere Feldgeräte F1, F2, F3, F4, angeschlossen. Bei den Feldgeräten F1, F2, F3, F4 kann es sich sowohl um Sensoren oder um Aktoren handeln. Das Kommunikationsnetzwerk KN ist beispielsweise als drahtgebundener Feldbus ausgestaltet, welcher entsprechend nach einem der bekannten Feldbusstandards wie beispielsweise Profibus®, Foundation® Fieldbus oder HART® arbeitet. Wie im einleitenden Teil der Beschreibung erläutert, fällt auch das Gateway G unter den Begriff Feldgerät.

Jedes der Feldgeräte F1, F2, F3, F4, G besitzt zumindest eine Softwareanwendung S_{F1}, S_{F2}, S_{F3}, S_{F4}, S_{G}. Die Softwareanwendungen S_{F1}, S_{F2}, S_{F3}, S_{F4}, S_{G} tauschen über Kommunikationsschnittstellen Informationen untereinander aus. Die Softwareanwendungen S_{F2}, S_{F3}, S_{F4}, S_{G} können dabei entweder zwei separate Kommunikationsschnittstellen KS aufweisen, wobei eine der Kommunikationsschnittstellen KS für das Senden von Informationen dient und wobei die andere Kommunikationsschnittstelle KS für das Empfangen von Informationen dient. Es kann jedoch auch vorgesehen sein, dass eine Kommunikationsschnittstelle KS sowohl Informationen senden, als auch Informationen empfangen kann.

Zusätzlich zu den Feldgeräten F1, F2, F3, F4, G können auch die Rechnereinheiten R1, R2 Softwareanwendungen S_{R1}, S_{R2} mit entsprechenden Kommunikationsschnittstellen KS aufweisen.

Die Informationen können dabei über das Kommunikationsnetzwerk KN, KN' gesendet werden. Es kann auch vorgesehen sein, dass in einem Feldgerät F1, F2, F3, F4, G zumindest zwei oder mehrere Softwareanwendungen S_{F1}, S_{F2}, S_{F3}, S_{F4}, S_{G} implementiert sind. In diesem Fall können die Informationen auch innerhalb eines Feldgeräts F1, F2, F3, F4, G übermittelt werden.

Eine der beiden Rechnereinheiten R1, R2 erfasst aktuell aktivierte Sicherheitsfunktionen von jeder der Kommunikationsschnittstellen KS der Softwareanwendungen S_{F1}, S_{F2}, S_{F3}, S_{F4}, S_{G} der Feldgeräte F1, F2, F3, F4, G. Des Weiteren erfasst die Rechnereinheit RE1, RE2 zusätzlich alle aktivierbaren Sicherheitsstufen von jeder der Kommunikationsschnittstellen KS. Es kann dabei vorgesehen sein, dass sich die Rechnereinheit RE1, RE2 bei jeder der Softwareanwendungen S_{F1}, S_{F2}, S_{F3}, S_{F4}, S_{G} authentifizieren muss um Zugriff zu den aktuell eingestellten Sicherheitsstufen und den zusätzlich aktivierbaren Sicherheitsstufen von jeder der Kommunikationsschnittstellen zu erlangen.

Die Rechnereinheit RE1, RE2 ermittelt aus den erfassten Daten zumindest eine Sicherheitsfunktion, die auf jeder der Kommunikationsschnittstellen KS verfügbar ist. Diese ermittelte gemeinsame Sicherheitsfunktion oder die ermittelten mehreren gemeinsamen Sicherheitsfunktionen werden dem Benutzer zur Auswahl auf der Recheneinheit RE1, RE2 angezeigt.

Bevorzugter Weise modelliert die Rechnereinheit den Informationsfluss der in dem Kommunikationsnetzwerk miteinander kommunizierenden Softwareanwendungen S_{F1}, S_{F2}, S_{F3}, S_{F4}, S_{G}. Dadurch kann angezeigt werden, welche Softwareanwendungen S_{F1}, S_{F2}, S_{F3}, S_{F4}, S_{G} überhaupt aktiv kommunizieren, welche Softwareanwendungen S_{F1}, S_{F2}, S_{F3}, S_{F4}, S_{G} an der Kommunikation nicht beteiligt sind, über welche Kommunikationsschnittstellen KS die Softwareanwendungen S_{F1}, S_{F2}, S_{F3}, S_{F4}, S_{G} kommunizieren und welche Softwareanwendung S_{F1}, S_{F2}, S_{F3}, S_{F4}, S_{G} jeweils mit welcher Softwareanwendung S_{F1}, S_{F2}, S_{F3}, S_{F4}, S_{G} kommuniziert.

Die Visualisierung kann entweder in tabellarischer Form erfolgen; alternativ kann diese jedoch auch in einem virtuellen Anlagenplan dargestellt werden. Bevorzugter Weise werden zu einer Kommunikationsschnittstelle KS alle auf dieser Kommunikationsschnittstelle KS aktivierbaren Sicherheitsfunktionen angezeigt. Dabei werden diejenigen Sicherheitsfunktionen ausgegraut oder nicht zur Auswahl bereitgestellt, die nicht in der Menge der ermittelten gemeinsamen Sicherheitsfunktionen enthalten sind.

Nach Auswahl einer oder mehrerer gemeinsamer Sicherheitsfunktionen re-konfiguriert die Recheneinheit RE1, RE2 alle Kommunikationsschnittstellen KS von jeder der Softwareanwendungen S_{F1}, S_{F2}, S_{F3}, S_{F4}, S_{G}. Konnte keine gemeinsame Sicherheitsfunktion ermittelt werden, so werden die einzelnen Kommunikationsschnittstellen KS derart re-konfiguriert, dass in keiner der Kommunikationsschnittstellen KS eine Sicherheitsfunktion aktiviert ist. Das ist insbesondere dann notwendig, wenn ein vorkonfiguriertes neues Feldgerät F1, F2, F3, F4, G zu dem Kommunikationsnetzwerk KN, KN' hinzugefügt wird, oder eine neue Software auf ein Feldgerät F1, F2, F3, F4, G aufgespielt wird. In diesem Fall könnten standardmäßig bereits Sicherheitsfunktionen der Kommunikationsschnittstellen KS aktiviert sein, die sich nicht auf allen Kommunikationsschnittstellen KS der übrigen Softwareanwendungen S_{F1}, S_{F2}, S_{F3}, S_{F4}, S_{G} finden lassen, was zu Fehlinterpretationen der ausgetauschten Informationen führen kann.

In einem zusätzlichen Verfahrensschritt kann vorgesehen sein, das Kommunikationsnetzwerk KN, KN' nach der Re-Konfiguration aller Kommunikationsschnittstellen KS zu evaluieren. Hierbei werden alle Kommunikationsschnittstellen KS dahingehend überprüft, ob die gemeinsame Sicherheitsfunktion korrekt aktiviert wurde. Des Weiteren wird geprüft, ob sich der Informationsfluss zwischen den einzelnen Softwarekomponenten S_{F1}, S_{F2}, S_{F3}, S_{F4}, S_{G} geändert hat. Fällt die Evaluation negativ aus, wird das erfindungsgemäße Verfahren ab dem Schritt des Auswählens einer oder mehrerer gemeinsamer aktivierbarer Softwarefunktionen wiederholt.

Alternativ zur Rechnereinheit RE1, RE 2 kann auch ein in Fig. 1 nicht gezeigtes mobiles Bediengerät zur Erfassung der Sicherheitsstufen jeder der Kommunikationsschnittstellen KS, zum Ermitteln einer gemeinsamen Sicherheitsstufe, zur Auswahl der Sicherheitsstufe, zum Re-Konfigurieren jeder der Sicherheitsschnittstellen KS und zur Visualisierung verwendet werden. Bei der mobilen Einheit kann es sich um ein Handbediengerät oder um einen Laptop, oder aber auch um ein mobiles Endgerät wie ein Tablet oder ein Smartphone handeln.

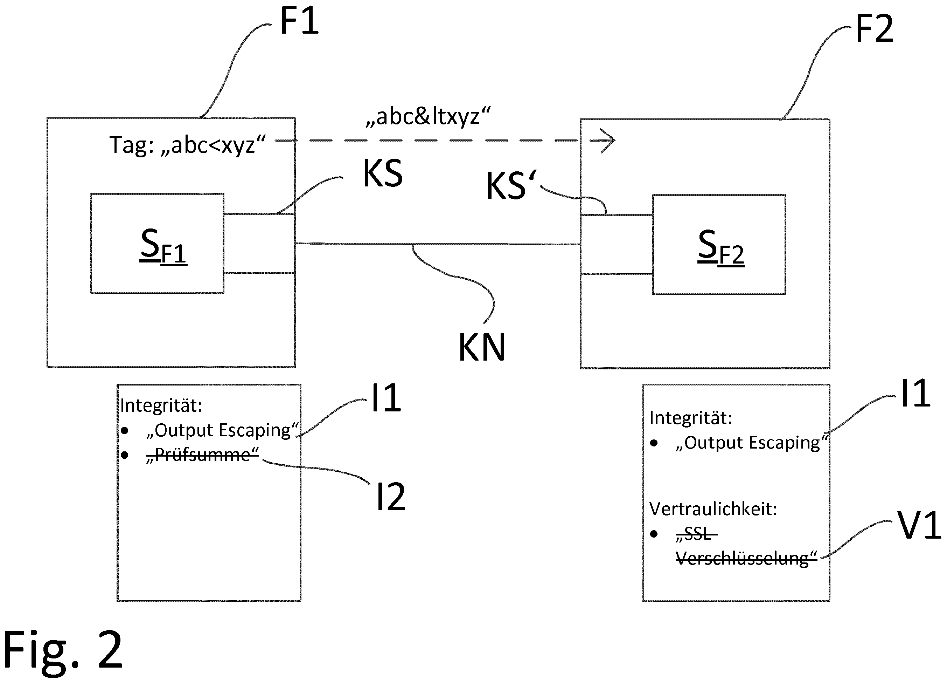

Fig. 2 zeigt eine Ausgestaltung des erfindungsgemäßen Verfahrens auf Grundlage des Sicherheitszieles Integrität. Exemplarisch für die Kommunikation sind die Softwarekomponenten S_{F1} und S_{F2} dargestellt, die auf Feldgeräten F1 bzw. F2 implementiert sind.

Nach Durchführen des Erfassens der aktuell aktivierten Sicherheitsfunktionen der Kommunikationsschnittstellen KS, KS' und des Erfassens aller aktivierbaren Sicherheitsfunktionen der Kommunikationsschnittstellen KS, KS' werden dem Benutzer auf einer Rechnereinheit RE1, RE2 die erfassten gemeinsamen Sicherheitsfunktionen I1 angezeigt. In diesem Falle ist das die Sicherheitsfunktion I1 Output Escaping, basierend auf dem Schutzziel Integrität, welche auf allen Kommunikationsschnittstellen KS, KS' verfügbar ist.

Neben der Sicherheitsfunktion Output I1 Escaping ermöglicht die Kommunikationsschnittstelle KS der Softwareanwendung S_{F1} das Hinzufügen einer Prüfsumme zu den gesendeten Informationen. Diese Sicherheitsfunktion I2 basiert ebenfalls auf dem Schutzziel Integrität.

Neben der Sicherheitsfunktion I1 Output Escaping ermöglicht die Kommunikationsschnittstelle der Softwareanwendung SF2 das Verschlüsseln der gesendeten Informationen mittels SSL. Diese Sicherheitsfunktion V1 basiert auf dem Schutzziel Vertraulichkeit.

Diese zusätzlichen Sicherheitsfunktionen I2, V1 werden dem Benutzer zwar angezeigt, jedoch sind diese ausgegraut oder auf andere Art und Weise nicht auswählbar für den Benutzer visualisiert.

Nachdem der Benutzer die gemeinsame Sicherheitsfunktion I1 Output Escaping ausgewählt hat, re-konfiguriert die Rechnereinheit RE1, RE2 die jeweiligen Kommunikationsschnittstellen KS, KS' der Softwareanwendungen SF1, SF2. Des Weiteren wird das Kommunikationsnetzwerk KN nach erfolgter Re-Konfiguration der Kommunikationsschnittstellen KS, KS' evaluiert.

Eine beispielshafte Kommunikation zwischen den Softwareanwendungen S_{F1}, S_{F2} sei im Folgenden beschrieben:
Die Softwareanwendung S_{F2} schickt an die Softwareanwendung S_{F1} eine Aufforderung zur Übersendung des TAGs des Feldgeräts F1, in welches die Softwareanwendung S_{F1} implementiert ist. Die Softwareanwendung S_{F1} identifiziert den TAG des Feldgeräts F1, "abc<xyz". Da das Zeichen "<" ein sicherheitskritisches Zeichen ist, ersetzt die Kommunikationsschnittstelle KS der Softwareanwendung SF1 dieses vor dem Versenden nach der Methode des Output Escapings beispielsweise mit der dem Zeichen"<" entsprechenden HTML-Einheit "&lt". Als Information wird folglich der TAG "abc&ltxyz" gesendet.

Die Kommunikationsschnittstelle KS' der Softwareanwendung S_{F2} empfängt diese gesendete Information. Da auch auf dieser Kommunikationsschnittstelle die Sicherheitsfunktion I1 Output Escaping aktiviert ist, erkennt die Kommunikationsschnittstelle KS die Veränderung des TAGs und wandelt dieses vor Weiterleitung an die Softwareanwendung S_{F2} in die ursprünglichen Zeichenfolge _{"}abc<xyz" um.

Abschließend wird anhand des in Fig. 2 gezeigten Ausführungsbeispiels erläutert, warum die Sicherheitsfunktionen zwangsläufig auf allen Kommunikationsschnittstellen aktivierbar sein müssen: In diesem Beispiel erlaubt die Kommunikationsschnittstelle KS' der Softwareanwendung S_{F2} die Verschlüsselung der Daten mittels SSL. Wird diese Sicherheitsfunktion aktiviert, so können die von dieser Kommunikationsschnittstelle KS' gesendeten Informationen nicht von der Kommunikationsschnittstelle KS der Softwareanwendung S_{F1} entschlüsselt werden.

Es versteht sich von selbst, dass das Verfahren auf jegliche Art und Anzahl von Softwareanwendungen in Feldgeräten F1, F2, F3, F4, G in einem Kommunikationsnetzwerk KN, KN' anwendbar ist und nicht auf die in dieser Ausgestaltung verwendeten Beispiele, Sicherheitsfunktionen I1, I2, V1 und Schutzziele beschränkt ist.

### Bezugszeichenliste

- KN, KN': Kommunikationsnetzwerk
- KS: Kommunikationsschnittstellte
- F1, F2, F3, F4: Feldgeräte
- G: Gateway
- I1, I2, V1: Sicherheitsfunktionen
- R1, R2: Rechnereinheit
- S_{F1}, S_{F2}, S_{F3}, S_{F4}, S_{G}: Softwareanwendungen

## Patentansprüche

1. Verfahren zum Verhindern eines unerlaubten Zugriffs auf Softwareanwendungen (S_{F1}, S_{F2}, S_{F3}, S_{F4}, S_{G}), welche in Feldgeräten (F1, F2, F3, F4, G) implementiert sind, wobei die Feldgeräte (F1, F2, F3, F4, G) in einem Kommunikationsnetzwerk (KN, KN') der Automatisierungstechnik integriert sind und wobei jede Softwareanwendung (S_{F1}, S_{F2}, S_{F3}, S_{F4}, S_{G}) über jeweils zumindest eine Kommunikationsschnittstelle (KS, KS') Informationen innerhalb des Kommunikationsnetzwerks (KN, KN') austauscht, umfassend:
- Erfassen aktuell aktivierter Sicherheitsfunktionen (I1, I2, V1), die auf Sicherheits- und/oder Funktionseigenschaften basieren, von jeder der Kommunikationsschnittstellen (KS, KS') der Softwareanwendungen(S_{F1}, S_{F2}, S_{F3}, S_{F4}, S_{G});
- Erfassen aller aktivierbaren Sicherheitsfunktionen (I1, I2, V1) einer jeden Kommunikationsschnittstelle (KS, KS');
- Ermitteln zumindest einer gemeinsamen Sicherheitsfunktion (I1, I2, V1), die auf jeder der Kommunikationsschnittstellen (KS, KS') aktivierbar ist;
- Anzeigen der zumindest einen gemeinsamen Sicherheitsfunktion (I1, I2, V1) und Auswählen zumindest einer angezeigten gemeinsamen Sicherheitsfunktion (I1, I2, V1); und
- Re-Konfigurieren von jeder der Kommunikationsschnittstellen (KS, KS'), wobei die jeweils aktuell eingestellten Sicherheitsfunktionen (I1, I2, V1) durch die zumindest eine ausgewählte gemeinsame Sicherheitsfunktion (I1, I2, V1) ersetzt werden, und wobei für den Fall, dass keine gemeinsame Sicherheitsfunktion (I1, I2, V1) ermittelt wurde, jede der Kommunikationsschnittstellen (KS, KS') so re-konfiguriert wird, dass keine Sicherheitsfunktion (I1, I2, V1) aktiviert ist.

2. Verfahren nach Anspruch 1, zusätzlich umfassend:
- Evaluieren des Kommunikationsnetzwerks (KN, KN'), wobei im Zuge der Evaluation alle Kommunikationsschnittstellen KS dahingehend überprüft werden, ob die gemeinsame Sicherheitsfunktion korrekt aktiviert wurde, und wobei im Falle einer negativen Evaluation das Verfahren ab dem Schritt des Auswählens einer oder mehrerer gemeinsamer Sicherheitsfunktionen (I1, I2, V1) wiederholt wird.

3. Verfahren nach einem der Ansprüche 1 oder 2, wobei eine Modellierung und Visualisierung eines Informationsflusses der miteinander kommunizierenden Softwareanwendungen (S_{F1}, S_{F2}, S_{F3}, S_{F4}, S_{G}) erfolgt, wobei die jeweiligen Kommunikationsschnittstellen (KS, KS') und deren jeweils aktivierbare Sicherheitsfunktionen (I1, I2, V1) visualisiert werden.

4. Verfahren nach Anspruch 3, wobei in der Visualisierung diejenigen aktivierbaren Sicherheitsfunktionen (I1, I2, V1) ausgegraut werden, welche nicht zu den gemeinsamen, auf jeder der Kommunikationsschnittstellen (KS, KS') einstellbaren Sicherheitsfunktionen gehören.

5. Verfahren nach einem der Ansprüche 3 oder 4, wobei die Auswahl zumindest einer gemeinsamen Sicherheitsfunktion (I1, I2, V1) über die Visualisierung des Informationsflusses erfolgt.

6. Verfahren nach zumindest einem der vorherigen Ansprüche, wobei das Verfahren nach Hinzufügen oder Entfernen einer Softwareanwendung (S_{F1}, S_{F2}, S_{F3}, S_{F4}, S_{G}) ausgeführt wird.

7. Verfahren nach zumindest einem der vorherigen Ansprüche, wobei das Verfahren nach jedem Update von einer der Softwareanwendungen (S_{F1}, S_{F2}, S_{F3}, S_{F4}, S_{G}) ausgeführt wird.

8. Kommunikationsnetzwerk (KN, KN') mit einer Rechnereinheit (R1, R2) und mit Feldgeräten (F1, F2, F3, F4, G), wobei Softwareanwendungen (S_{F1}, S_{F2}, S_{F3}, S_{F4}, S_{G} ) in den Feldgeräten (F1, F2, F3, F4, G) implementiert sind und wobei jede Softwareanwendung über jeweils zumindest eine Kommunikationsschnittstelle (KS, KS') zum Austausch von Informationen innerhalb des Kommunikationsnetzwerks (KN, KN') vorgesehen ist, wobei die Rechnereinheit (R1, R2) zur Durchführung des Verfahrens nach zumindest einem der Ansprüche 1 bis 7 angepasst ist.

9. Kommunikationsnetzwerk (KN, KN') nach Anspruch 8, wobei das Kommunikationsnetzwerk (KN, KN') ein Drahtlosnetzwerk, insbesondere basierend auf dem Protokoll WirelessHART, ist.

10. Kommunikationsnetzwerk (KN, KN') nach Anspruch 9, wobei das Kommunikationsnetzwerk (KN, KN') ein drahtgebundenes Netzwerk, bevorzugt basierend auf einem Feldbusprotokoll der Automatisierungstechnik, ist.

## Claims

1. Method designed to prevent unauthorized access to software applications (S_{F1}, S_{F2}, S_{F3}, S_{F4}, S_{G}), which are implemented in field devices (F1, F2, F3, F4, G), said field devices (F1, F2, F3, F4, G) being integrated in an automation engineering communication network (KN, KN'), and wherein each software application (S_{F1}, S_{F2}, S_{F3}, S_{F4}, S_{G}) exchanges information within the communication network (KN, KN') via at least one communication interface (KS, KS'), wherein said method comprises the following steps:
- Detection of the currently active safety functions (I1, I2, V1), which are based on safety and/or function properties, of each of the communication interfaces (KS, KS') of the software applications (S_{F1}, S_{F2}, S_{F3}, S_{F4}, S_{G});
- Detection of all the activatable safety functions (I1, I2, V1) of each communication interface (KS, KS');
- Determination of at least one common safety function (I1, I2, V1) that can be activated on each of the communication interfaces (KS, KS');
- Display of the at least one common safety function (I1, I2, V1) and selection of at least one displayed common safety function (I1, I2, V1); and
- Reconfiguration of each of the communication interfaces (KS, KS'), where the safety functions (I1, I2, V1) currently configured are replaced by the at least one selected common safety function (I1, I2, V1) and wherein, in the event that a common safety function (I1, I2, V1) was not determined, each of the communication interfaces (KS, KS') is reconfigured in such a way that no safety function (I1, I2, V1) is activated.

2. Method as claimed in Claim 1, additionally comprising:
- Evaluation of the communication network (KN, KN'), wherein, in the course of the evaluation, all the communication interfaces KS are checked to determine whether the common safety function has been activated correctly, and wherein, in the event of a negative evaluation, the method is repeated from the step involving the selection of one or more common safety functions (I1, I2, V1).

3. Method as claimed in one of the Claims 1 or 2, wherein a flow of information of the intercommunicating software applications (S_{F1}, S_{F2}, S_{F3}, S_{F4}, S_{G}) is modeled and visualized, wherein the individual communication interfaces (KS, KS') and their safety functions (I1, I2, V1) which can be activated are visualized.

4. Method as claimed in Claim 3, wherein the activatable safety functions (I1, I2, V1) that do not belong to the common safety functions that can be configured on each of the communication interfaces (KS, KS') are grayed out in the visualization.

5. Method as claimed in one of the Claims 3 or 4, wherein at least one common safety function (I1, I2, V1) is selected via the visualization of the information flow.

6. Method as claimed in at least one of the previous claims, wherein the method is performed following the addition or removal of a software application (S_{F1}, S_{F2}, S_{F3}, S_{F4}, S_{G}).

7. Method as claimed in at least one of the previous claims, wherein the method is performed after each update of one of the software applications (S_{F1}, S_{F2}, S_{F3}, S_{F4}, S_{G}).

8. Communication network (KN, KN') with a computer unit (R1, R2) and with field devices (F1, F2, F3, F4, G), wherein software applications (S_{F1}, S_{F2}, S_{F3}, S_{F4}, S_{G}) are implemented in the field devices (F1, F2, F3, F4, G) and wherein each software application is provided to exchange information within the respective communication network (KN, KN') via at least one communication interface (KS, KS'), wherein the computer unit (R1, R2) is adapted to perform the method as claimed in at least one of the Claims 1 to 7.

9. Communication network (KN, KN') as claimed in Claim 8, wherein the communication network (KN, KN') is a wireless network, particularly based on the WirelessHART protocol.

10. Communication network (KN, KN') as claimed in Claim 9, wherein the communication network (KN, KN') is a wired network, preferably based on a fieldbus protocol used in automation engineering.

## Revendications

1. Procédé destiné à empêcher un accès non autorisé à des applications logicielles (S_{F1}, S_{F2}, S_{F3}, S_{F4}, S_{G}), lesquelles applications sont implémentées dans les appareils de terrain (F1, F2, F3, F4, G), les appareils de terrain (F1, F2, F3, F4, G) étant intégrés dans un réseau de communication (KN, KN') de la technique d'automatisation, et chaque application logicielle (S_{F1}, S_{F2}, S_{F3}, S_{F4}, S_{G}) échangeant des informations au sein du réseau de communication (KN, KN') via au moins une interface de communication (KS, KS'), lequel procédé comprend :
- Détection des fonctions de sécurité (I1, I2, V1) actuellement activées, qui se basent sur les propriétés de sécurité et/ou de fonction, de chacune des interfaces de communication (KS, KS') des applications logicielles (S_{F1}, S_{F2}, S_{F3}, S_{F4}, S_{G}) ;
- Détection de toutes les fonctions de sécurité (I1, I2, V1) activables de chaque interface de communication (KS, KS') ;
- Détermination d'au moins une fonction de sécurité (I1, I2, V1) commune, qui est activable sur chacune des interfaces de communication (KS, KS') ;
- Affichage de l'au moins une fonction de sécurité (I1, I2, V1) commune et sélection d'au moins une fonction de sécurité (I1, I2, V1) commune affichée ; et
- Reconfiguration de chacune des interfaces de communication (KS, KS'), les fonctions de sécurité (I1, I2, V1) actuellement réglées étant remplacées par l'au moins une fonction de sécurité (I1, I2, V1) commune sélectionnée et, dans le cas où une fonction de sécurité (I1, I2, V1) commune a été déterminée, chacune des interfaces de communication (KS, KS') étant reconfigurée de telle sorte qu'aucune fonction de sécurité (I1, I2, V1) ne soit activée.

2. Procédé selon la revendication 1, comprenant en outre :
- Évaluation du réseau de communication (KN, KN'), toutes les interfaces de communication KS étant vérifiées, dans le cadre de l'évaluation, pour s'assurer que la fonction de sécurité commune a été activée correctement et, dans le cas d'une évaluation négative, le procédé étant repris à partir de l'étape de la sélection d'une ou de plusieurs fonctions de sécurité (I1, I2, V1) communes.

3. Procédé selon l'une des revendications 1 ou 2, pour lequel intervient une modélisation et une visualisation d'un flux d'informations des applications logicielles (S_{F1}, S_{F2}, S_{F3}, S_{F4}, S_{G}) communiquant entre elles, les différentes interfaces de communication (KS, KS') et leurs fonctions de sécurité (I1, I2, V1) respectivement activables étant visualisées.

4. Procédé selon la revendication 3, pour lequel sont grisées dans la visualisation, les fonctions de sécurité (I1, I2, V1) activables qui n'appartiennent pas aux fonctions de sécurité réglables en commun sur chacune des interfaces de communication (KS, KS').

5. Procédé selon l'une des revendications 3 ou 4, pour lequel la sélection d'au moins une fonction de sécurité (I1, I2, V1) commune s'effectue par le biais de la visualisation du flux d'informations.

6. Procédé selon l'une des revendications précédentes, pour lequel le procédé est exécuté après l'ajout ou la suppression d'une application logicielle (S_{F1}, S_{F2}, S_{F3}, S_{F4}, S_{G}).

7. Procédé selon l'une des revendications précédentes, pour lequel le procédé est exécuté après chaque mise à jour de l'une des applications logicielles (S_{F1}, S_{F2}, S_{F3}, S_{F4}, S_{G}).

8. Réseau de communication (KN, KN') avec une unité de calcul (R1, R2) et avec des appareils de terrain (F1, F2, F3, F4, G), les applications logicielles (S_{F1}, S_{F2}, S_{F3}, S_{F4}, S_{G}) étant implémentées dans les appareils de terrain (F1, F2, F3, F4, G) et chaque application logicielle étant prévue pour échanger des informations au sein du réseau de communication (KN, KN') respectivement via au moins une interface de communication (KS, KS'), l'unité de calcul (R1, R2) étant adaptée pour la réalisation du procédé selon l'une des revendications 1 à 7.

9. Réseau de communication (KN, KN') selon la revendication 8, pour lequel le réseau de communication (KN, KN') est un réseau sans fil, notamment basé sur le protocole WirelessHART.

10. Réseau de communication (KN, KN') selon la revendication 9, pour lequel le réseau de communication (KN, KN') est un réseau filaire, de préférence basé sur un protocole de bus de terrain de la technique d'automatisation.
